# FASCICULE DE BREVET EUROPEEN

(11) **EP 0 929 482 B1**
(45) Date de publication et mention de la délivrance du brevet: **12.07.2000**
(21) Numéro de dépôt: 97926038.7
(22) Date de dépôt: 26.05.1997
(51) Int. Cl.: B65G 29/00, B65G 47/84

(54) **DISPOSITIF ROTATIF DE CONVOYAGE DE RECIPIENTS**
DREHVORRICHTUNG ZUM FÖRDERN VON BEHÄLTERN
ROTARY DEVICE FOR CONVEYING CONTAINERS

(30) Priorité: 28.05.1996 FR 9606553
(43) Date de publication de la demande: 21.07.1999
(73) Titulaire: S.E.R.A.C. GROUP, 72400 La Ferte-Bernard (FR)
(72) Inventeur: DUVAL, Alain, Carol Stream, IL 60188 (US)
(74) Mandataire: Fruchard, Guy
(86) Numéro de dépôt international: FR9700919
(87) Numéro de publication internationale: WO9745347

(56) Documents cités:
- DE-C- 4 332 095
- DE-U- 9 310 905
- FR-A- 2 270 176

## Description

La présente invention concerne un dispositif rotatif de convoyage de récipients.

On connaît des dispositifs rotatifs de convoyage de récipients permettant d'assurer, soit un simple transfert des récipients entre un convoyeur et un autre dispositif rotatif, soit une opération en temps masqué telle que la fermeture des récipients.

Un tel dispositif comporte généralement un plateau support fixé sur un châssis, un rail de guidage fixé sur le plateau support, et un organe d'entraînement porté par un axe traversant le plateau support et relié à un mécanisme d'entraînement par l'intermédiaire d'un palier dont le corps est fixé au châssis. L'organe d'entraînement se présente sous la forme d'une plaque en étoile présentant sur sa périphérie une pluralité d'alvéoles dans lesquels viennent se loger les récipients, à la façon d'un engrenage. Les alvéoles de la plaque en étoile assurent à la fois l'entraînement des récipients qui glissent sur le plateau support, le guidage des récipients contre le rail de guidage et la stabilisation de ces récipients en position debout. Pour les récipients allongés en hauteur, l'organe d'entraînement comporte deux plaques à alvéoles identiques superposées espacées l'une de l'autre.

Les deux fonctions de guidage et de stabilisation assurées par la plaque d'entraînement imposent un faible jeu entre chaque récipient et l'alvéole qui lui est associé. Cela implique d'une part que les dimensions de l'alvéole sont adaptées à celles du récipient, et d'autre part que la distance entre le fond de l'alvéole et le bord intérieur du rail de guidage soit voisine du diamètre du récipient. De cette seconde exigence, il résulte que l'axe de la plaque d'entraînement doit être concentrique à celui du rail de guidage. Comme le rail de guidage est fixé sur le plateau support tandis que le corps de palier est monté sur le châssis, il s'ensuit une addition des imprécisions de montage d'autant plus que ce montage est effectué sur site lors de l'implantation de la chaîne de production. En outre, lors d'un changement de rail de guidage correspondant à un changement de récipients, cette imprécision est une cause de perte de temps en raison des réglages qui sont nécessaires.

On connaît par ailleurs du document FR-A-2.270.176 un dispositif rotatif de convoyage de récipients comportant un organe de guidage circulaire comprenant une piste et un rail extérieur, et relié au corps d'un palier par une potence montée sur le corps de palier par une bague, et un organe d'entraînement porté concentriquement à l'organe de guidage par un arbre d'entraînement monté dans le palier. La liaison entre l'organe de guidage et le corps de palier ne fait plus intervenir le châssis de sorte que l'on obtient une bonne concentricité de l'organe de guidage par rapport à l'organe d'entraînement. Toutefois, la position angulaire de la potence et la position radiale de l'organe de guidage sur la potence ne sont pas fixés de sorte qu'il est nécessaire de procéder à des réglages au moment de l'installation.

Selon l'invention on propose un dispositif rotatif de convoyage du type précité dans lequel la potence est reliée au corps de palier dans une position fixe et est équipée de moyens d'indexation coopérant avec des moyens d'indexation complémentaires portés par l'organe de guidage.

Ainsi, la position de l'organe de guidage est totalement déterminée et ne nécessite aucun réglage lors du montage.

Selon une première caractéristique avantageuse de l'invention, la potence posssède une extrémité libre pourvue de moyens de fixation amovible de l'organe de guidage. Le montage de l'organe de guidage sur la potence est ainsi particulièrement commode et permet un remplacement rapide de l'organe tout en conservant une bonne précision du positionnement de celui-ci par rapport à l'arbre d'entraînement.

Selon une autre caractéristique de l'invention l'organe d'entraînement comporte une pluralité de palettes disposées en étoile autour de l'arbre d'entraînement à l'aplomb de la piste. De préférence, les palettes sont montées par paires, avec une palette arrière de poussée et une palette avant de retenue.

Pour les récipients allongés en hauteur et par suite instables, les palettes de poussée d'une part et les palettes de retenue d'autre part sont réglables angulairement les unes par rapport aux autres.

D'autres caractéristiques et avantages de l'invention ressortiront à la lecture de la description qui suit d'un de ses modes de réalisation donné à titre d'exemple non limitatif.

Il sera fait référence aux dessins annexés, parmi lesquels :
- la figure 1 est une vue partielle en perspective d'un dispositif conforme à l'invention,
- la figure 2 est une vue analogue à la figure 1 en éclaté,
- la figure 3 est une vue en élévation partiellement en coupe du dispositif des figures 1 et 2.
- la figure 4 est une vue partielle en perspective d'un autre mode de réalisation d'un dispositif conforme à l'invention,
- la figure 5 est une vue de détail en perspective de l'organe de guidage du dispositif de la figure 4,
- la figure 6 est une vue de détail en perspective éclatée illustrant le montage des deux plateaux de l'organe d'entraînement du dispositif de la figure 4,
- la figure 7 est une vue analogue à la figure 4, illustrant une variante de réalisation de l'organe d'entraînement.

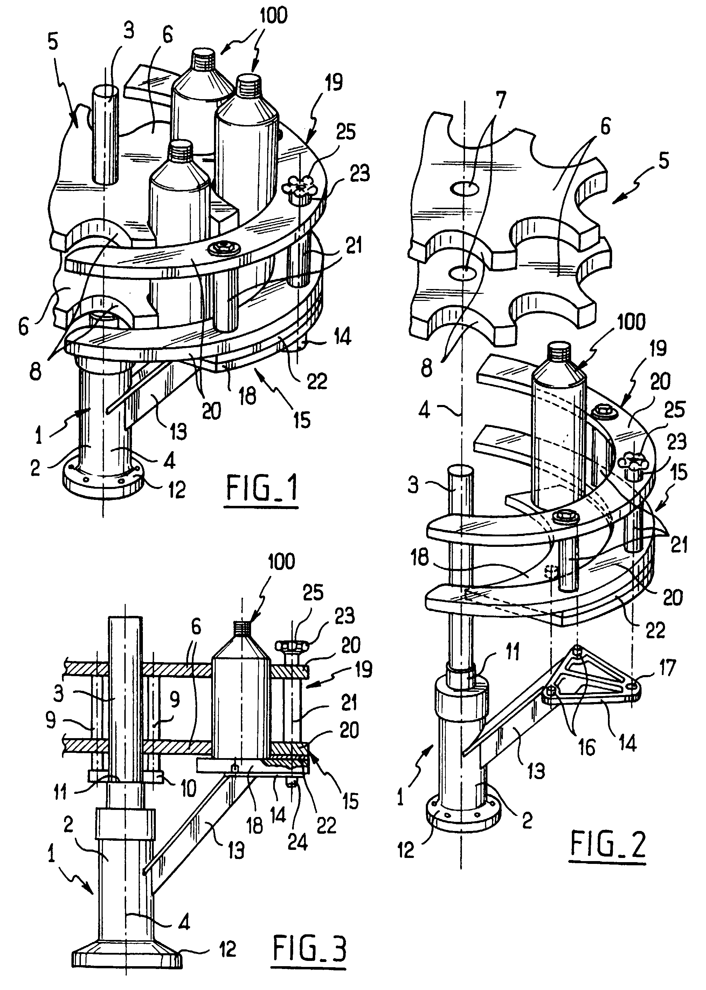

Aux figures 1 à 3, on a représenté un premier mode de réalisation d'un dispositif rotatif de convoyage de récipients 100 (ici des bouteilles) conforme à l'invention. Le dispositif comporte un palier 1 ayant un corps 2 et portant un arbre d'entraînement 3 d'axe vertical 4. Cet arbre est entraîné en rotation autour de l'axe 4 par des moyens (non représentés) tels qu'un moteur ou un mécanisme à engrenages.

L'arbre d'entraînement 3 s'étend au-dessus du palier 1 et comporte une portion sur laquelle est monté un organe d'entraînement 5 en forme générale d'étoile. Cet organe d'entraînement 5 est solidaire en rotation de l'arbre 3. Il comporte ici deux plaques 6 identiques en étoile superposées espacées l'une de l'autre et présentant chacune un passage central 7 pour l'arbre 3. Chaque plaque 6 présente également sur sa périphérie une pluralité d'alvéoles 8 formant des logements pour les récipients 100. Les deux plaques 6 sont maintenues espacées l'une de l'autre par des entretoises verticales 9 qui sont réunies, en-dessous de la plaque inférieure 6 par une bague 10 montée sur l'arbre 3 en appui contre un épaulement 11 de cet arbre.

Le corps de palier 2 comporte, à son extrémité inférieure, une embase 12.

Le corps de palier 2 est par ailleurs équipé d'une potence 13. Cette potence 13 est ici inclinée environ à 45° vers le haut et est équipée, à son extrémité supérieure libre 14, de moyens d'indexation et de fixation amovible d'un organe de guidage 15. En l'espèce, l'extré mité de la potence 13 se présente sous la forme d'une plaque triangulaire 14 ayant deux sommets équipés de pions d'indexation 16 s'étendant verticalement en saillie de cette plaque 14, et un troisième sommet dans lequel est ménagé un trou taraudé 17.

L'organe de guidage 15 comporte une piste 18 en arc de cercle qui s'étend dans un plan horizontal. Cette piste 18 est bordée extérieurement par un rail circulaire extérieure 19 qui lui est rigidement fixé.

Dans l'exemple illustré, le rail 19 comporte deux rambardes en arc de cercle 20 identiques superposées. Ces deux rambardes 20 sont reliées à distance l'une de l'autre par des entretoises verticales 21. Une cale de surélévation 22 est de plus insérée entre la rambarde inférieure 20 et la piste 18. Le montage amovible de l'organe de guidage 15 sur la plaque 14 est réalisé d'un bloc par l'intermédiaire de la piste 18 qui repose sur la plaque triangulaire 14 et qui présente, en renfoncement de sa face inférieure, des logements associés aux pions d'indexation 16. De plus, une tige de bridage 23 traverse l'une des entretoises verticales 21 du rail 19 et est engagée, par une extrémité filetée 24 dans le trou taraudé 17 de la plaque 14. Cette tige 23 possède, à son extrémité supérieure, une poignée 25 facilitant le vissage et le dévissage dans le trou 17.

En service, l'organe de guidage 15 est raccordé par une de ses extrémités à un convoyeur, et, a son autre extrémité en regard d'un autre convoyeur ou d'un autre dispositif rotatif tel qu'un carrousel. La rotation de l'arbre 3 et de l'organe d'entraînement 5 assure, à la façon d'un engrenage, l'entraînement des bouteilles 100 sur l'organe de guidage 15.

Le fait que l'organe de guidage 15 soit rigidement relié au corps de palier 2 par l'intermédiaire de la potence 13 permet de garantir une bonne concentricité du rail 19 avec l'arbre 3. On comprend en effet que la potence 13 et sa plaque de fixation 14 sont réalisées en atelier, ce qui permet une fabrication non seulement plus aisée et plus rapide, mais également plus précise qu'un montage sur site.

Grâce à cette bonne concentricité du rail 19 avec l'arbre 3, il n'est pas nécessaire qu'un jeu important soit prévu entre les récipients 100 et la piste des alvéoles 8. Les récipients 100 sont donc guidés avec plus de précision et leur stabilité est mieux assurée.

Par ailleurs, le remplacement de l'organe de guidage 15 est particulièrement aisé : il suffit de dévisser la tige 23 pour désolidariser l'organe de guidage 15 d'avec la plaque 14 et de le remplacer par l'organe de guidage souhaité. Le positionnement de l'organe de guidage 15 sur la plaque 14 est assuré par les pions d'indexation 16 et est donc extrêmement précis et rapide. Le trou taraudé 17 et la tige 23 ne servent qu'à assurer le bridage de l'organe de guidage 15 sur la plaque 14.

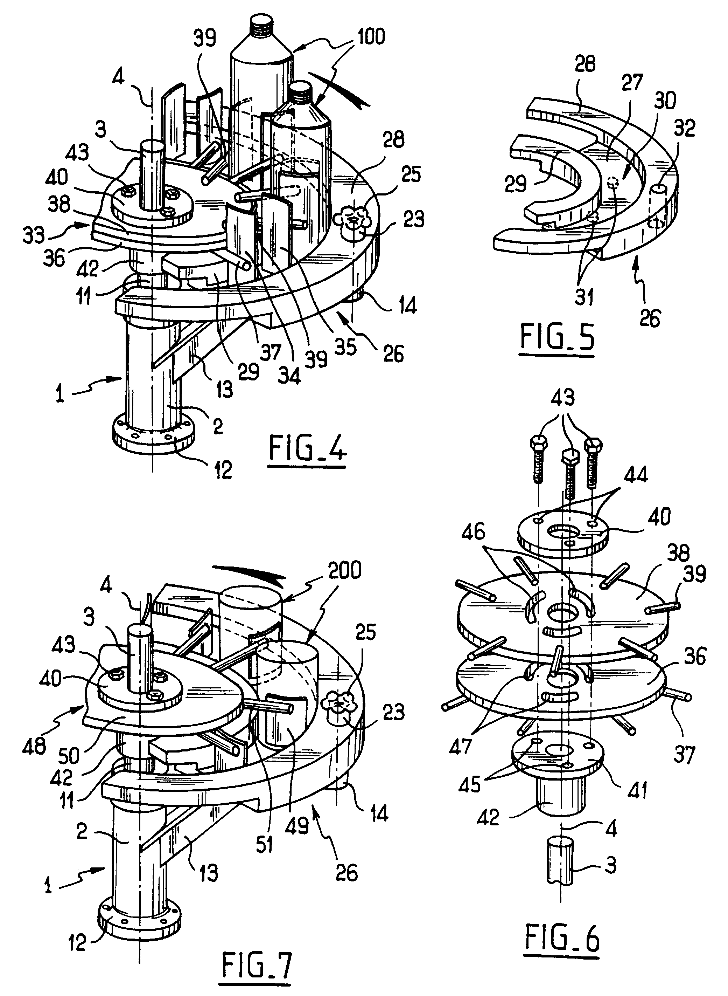

Aux figures 4 à 6, on a représenté un second mode de réalisation d'un dispositif rotatif de convoyage de récipients conforme à l'invention. Les éléments identiques au mode de réalisation précédemment décrit ont été désignés par les mêmes références numériques. On distingue ainsi en particulier le palier 1, l'arbre 3 et la potence 13 avec sa plaque triangulaire de fixation 14.

Le dispositif se différencie du mode de réalisation précédemment décrit par son organe de guidage qui est ici désigné par la référence générale 26 et par son organe d'entraînement qui est ici désigné par la référence générale 33.

Outre une piste 27 et un rail extérieur 28, l'organe de guidage 26 comporte un rail intérieur 29. Ce rail intérieur est solidaire de la piste 27 et définit avec le rail extérieur 28 un couloir de guidage 30.

L'organe de guidage 26 est en outre réalisé en une seule pièce, les rails 28 et 29 étant constitués par des bordures de faible hauteur. Pour sa fixation à la plaque 14, l'organe de guidage 26 présente, comme précédemment, des logements 31 ménagés dans la face inférieure de la piste 27 pour coopérer avec les pions d'indexation de la plaque 14 et un passage 32, ménagé dans le rail extérieur 28, pour permettre le passage de la tige de bridage 23.

D'autre part, l'organe d'entraînement 33 comporte une pluralité de palettes 34, 35 disposées en étoile autour de l'arbre d'entraînement 3, à l'aplomb du couloir de guidage 30. Ces palettes sont montées par paires, avec une palette arrière de poussée 34 et une palette avant de retenue 35.

Les palettes de poussée 34 d'une part et les palettes de retenue 35 d'autre part sont respectivement montées sur deux plateaux 36, 38 par l'intermédiaire de barrettes de liaison radiale 37, 39. Les plateaux 36, 38 sont montés sur l'arbre 3 pour être entraînés en rotation par cet arbre, mais de façon à être réglables angulairement indépendamment l'un de l'autre. En particulier, le calage angulaire relatif des plateaux 36, 38 l'un par rapport à l'autre peut être réglé, ce qui permet d'ajuster l'écartement des palettes de poussée 34 et de retenue 35 au diamètre des bouteilles 100 sans qu'il soit nécessaire de remplacer ou même de démonter l'organe d'entraînement 33.

A cet effet, comme cela est mieux visible à la figure 6, chaque plateau 36, 38 est monté sur l'arbre 3 pour tourner librement. Les deux plateaux 36, 38 sont superposés et sont bridés l'un contre l'autre par deux disques 40, 41 montés de part et d'autre de ces plateaux. Le disque 41 est solidaire d'une bague 42 qui est rendue solidaire en rotation de l'arbre 3 (par exemple par clavetage). Le bridage des disques 40 et 41 est assuré par trois boulons 43 qui traversent des perçages 44 du disque 40 ainsi que des lumières oblongues 46, 47 respectivement ménagées dans les plateaux 36, 38, et qui coopèrent avec des trous taraudés 45 ménagés en correspondance dans le disque 41. Ainsi, lorsque les boulons 43 sont desserrés, les plateaux 36, 38 peuvent pivoter indépendamment l'un de l'autre sur l'arbre 3, les lumières allongées 46, 47 permettant le déplacement relatif des plateaux 36, 38 entre eux et par rapport au disque 41. Lorsqu'un calage angulaire satisfaisant des plateaux 36, 38 est obtenu, les boulons 43 sont resserrés, de sorte que les disques 40, 41 assurent le bridage des plateaux 36, 38 et verrouillent donc par friction le calage angulaire obtenu.

A la figure 7, on a représenté une variante de réalisation du mode de réalisation illustré par les figures 4 à 6. Le seul changement concerne la structure de l'organe d'entraînement qui est ici désigné par la référence générale 48. Cet organe d'entraînement est ici adapté à des récipients 200 de plus faible hauteur et présentant donc une meilleure stabilité lors de leur glissement sur la piste de l'organe de guidage 26. Les palettes avant de retenue et le plateau correspondant ont été supprimés, si bien que seules subsistent des palettes d'entraînement 49, de plus faible hauteur, reliées par des barrettes radiales 51 à un plateau 50 monté sur l'arbre 3 pour être entraîné en rotation par celui-ci. Le montage du plateau 50 sur l'arbre 3 est réalisé, comme précédemment, de façon à permettre un réglage de la position angulaire de ce plateau sur l'arbre 3. A cet effet, un montage au moyen de disques de bridage analogue à celui de la figure 6 est utilisé.

L'invention n'est pas limitée aux modes de réalisation qui viennent d'être décrits, mais englobe au contraire toute variante reprenant, avec des moyens équivalents, les caractéristiques essentielles de l'invention. En particulier, bien qu'il ait été décrit un dispositif dans lequel la liaison de l'organe de guidage au corps de palier est réalisée au moyen d'une potence solidaire du corps de palier et équipée à son extrémité libre de moyens pour la fixation amovible de l'organe de guidage, il est également possible de réaliser un dispositif dans lequel la liaison rigide de l'organe de guidage au corps de palier est assurée par l'intermédiaire d'une pièce séparée rapportée sur le corps de palier et/ou par l'intermédiaire d'une embase solidaire du corps de palier, ou encore par l'intermédiaire d'une partie de l'organe de guidage ménagée spécialement pour être rapportée sur une partie correspondante du corps de palier.

Bien que l'invention ait été illustrée avec deux pions d'indexation 16, on peut prévoir un seul pion d'indexation, le trou taraudé 17 faisant alors fonction de deuxième organe d'indexation.

## Revendications

1. Dispositif rotatif de convoyage de récipients (100, 200) comportant un organe de guidage circulaire (15; 26) comprenant une piste (18 ; 27) et au moins un rail extérieur (19; 28), et relié par une potence (13) au corps d'un palier (2), et un organe d'entraînement (5 ; 33 ; 48) porté par le palier (2) concentriquement à l'organe de guidage, caractérisé en ce que la potence est reliée au corps de palier dans une position fixe et est équipée de moyens d'indexation (16) coopérant avec des moyens d'indexation complémentaires (31) portés par l'organe de guidage.

2. Dispositif selon la revendication 1, caractérisé en ce que la potence (13) posssède une extrémité libre pourvue de moyens pour une fixation amovible de l'organe de guidage.

3. Dispositif selon la revendication 2, caractérisé en ce que les moyens de fixation amovible de l'organe de guidage (15 ; 26) sur l'extrémité libre de la potence (13) comportent une plaque (14) et en ce que les moyens d'indexation (16) sont portés par la plaque (14).

4. Dispositif selon la revendication 1, caractérisé en ce que l'organe de guidage (26) comporte un rail intérieur (29) solidaire de la piste (27) et définissant avec le rail extérieur (28) un couloir de guidage (30).

5. Dispositif selon la revendication 4, caractérisé en ce que l'organe d'entraînement (33 ; 48) comporte une pluralité de palettes (34, 35 ; 49) disposées en étoile autour de l'arbre d'entraînement (3) à l'aplomb du couloir de guidage (30) de l'organe de guidage (26).

6. Dispositif selon la revendication 5, caractérisé en ce que les palettes sont montées par paires, avec une palette arrière de poussée (34) et une palette avant de retenue (35).

7. Dispositif selon la revendication 6, caractérisé en ce que les palettes de poussée (34) d'une part et les palettes de retenue (35) d'autre part sont réglables angulairement les unes par rapport aux autres.

8. Dispositif selon la revendication 7, caractérisé en ce que les palettes de poussée (34) d'une part et les palettes de retenue (35) d'autre part sont montées sur deux plateaux (36, 38) distincts montés sur l'arbre d'entraînement (3) de façon à être réglables angulairement l'un par rapport à l'autre.

## Patentansprüche

1. Drehvorrichtung zum Fördern von Behältern (100, 200), mit einem kreisförmigen Führungsorgan (15; 26), das eine Bahn (18; 27) und mindestens eine Außenschiene (19; 28) enthält und über einen Ausleger (13) mit dem Gehäuse eines Lagers (2) verbunden ist, und einem Antriebsorgan (5; 33; 48), das von dem Lager (2) konzentrisch zum Führungsorgan getragen wird, dadurch **gekennzeichnet,** daß der Ausleger mit dem Lagergehäuse in einer ortsfesten Stellung verbunden und mit Indexierungsmitteln (16) versehen ist, die mit komplementären Indexierungsmitteln (31) zusammenwirken, die von dem Führungsorgan getragen werden.

2. Vorrichtung nach Anspruch 1, dadurch **gekennzeichnet,** daß der Ausleger (13) ein freies Ende hat, das mit Mitteln für eine lösbare Befestigung des Führungsorgans versehen ist.

3. Vorrichtung nach Anspruch 2, dadurch **gekennzeichnet,** daß die Mittel zur lösbaren Befestigung des Führungsorgans (15; 26) am freien Ende des Auslegers (13) eine Platte haben (14), und daß die Indexierungsmittel (16) von der Platte (14) getragen werden.

4. Vorrichtung nach Anspruch 1, dadurch **gekennzeichnet,** daß das Führungsorgan (26) eine Innenschiene (29) hat, die fest mit der Bahn (27) verbunden ist und mit der Außenschiene (28) eine Führungsbahn (30) bildet.

5. Vorrichtung nach Anspruch 4, dadurch **gekennzeichnet,** daß das Antriebsorgan (33; 48) eine Vielzahl von Schaufeln (34, 35; 49) enthält, die sternförmig um die Antriebswelle (3) herum senkrecht oberhalb der Führungsbahn (30) des Führungsorgans (26) angeordnet sind.

6. Vorrichtung nach Anspruch 5, dadurch **gekennzeichnet,** daß die Schaufeln paarweise angebracht sind, mit einer hinteren Schubschaufel (34) und einer vorderen Halteschaufel (35).

7. Vorrichtung nach Anspruch 6, dadurch **gekennzeichnet,** daß die Schubschaufeln (34) einerseits und die Halteschaufeln (35) andererseits zueinander winkelverstellbar sind.

8. Vorrichtung nach Anspruch 7, dadurch **gekennzeichnet,** daß die Schubschaufeln (34) einerseits und die Halteschaufeln (35) andererseits auf zwei verschiedenen Platten (36, 38) angebracht sind, die so auf der Antriebswelle (3) angebracht sind, daß sie zueinander winkelverstellbar sind.

## Claims

1. A rotary device for conveying receptacles (100, 200), the device comprising a circular guide member (15; 26) having a track (18; 27) and at least one outer railing (19; 28), and connected by means of a bracket (13) to the body of a bearing (2), and a drive member (5; 33; 48) carried by the bearing (2) concentrically relative to the guide member, the device being characterized in that the bracket is connected to the body of the bearing in a fixed position and is fitted with indexing means (16) that co-operate with complementary indexing means (31) carried by the guide member.

2. A device according to claim 1, characterized in that the bracket (13) has a free end provided with means for removably fixing the guide member.

3. A device according to claim 2, characterized in that the means for removably fixing the guide member (15; 26) on the free end of the bracket (13) comprise a fixing plate (14), and in that the indexing means (16) are carried by the fixing plate (14).

4. A device according to claim 1, characterized in that the guide member (26) has an inside railing (29) secured to the track (27) and co-operating with the outside railing (28) to define a guide passage (30).

5. A device according to claim 4, characterized in that the drive member (33; 48) includes a plurality of blades (34, 35; 49) disposed in a star configuration around the drive shaft (3) over the guide passage (30) of the guide member (26).

6. A device according to claim 5, characterized in that the blades are mounted in pairs, each pair comprising a rear thrust blade (34) and a front retaining blade (35).

7. A device according to claim 6, characterized in that the thrust blades (34) are angularly adjustable relative to the retaining blades (35) .

8. A device according to claim 7, characterized in that the thrust blades (34) and the retaining blades (35) are mounted on two respective hub plates (36, 38) themselves mounted on the drive shaft (3) in such a manner as to be angularly adjustable relative to each other.
